# EUROPÄISCHE PATENTANMELDUNG

(11) **EP 4 124 006 A1**
(43) Veröffentlichungstag der Anmeldung: **25.01.2023**
(21) Anmeldenummer: 22185941.6
(22) Anmeldetag: 20.07.2022
(51) Int. Cl.: H04M 1/72466, G06Q 30/06, H04M 1/22

(54) **KOMMUNIKATIONSGERÄT MIT ANZEIGE VON AUSGEWÄHLTEN NACHRICHTEN**

(30) Priorität: 22.07.2021 DE 102021119046
(71) Anmelder: Curic, Mirco, 46236 Bottrop (DE)
(72) Erfinder: Curic, Mirco, 46236 Bottrop (DE)
(74) Vertreter: Gesthuysen Patentanwälte

(57) **Zusammenfassung**

Dargestellt und beschrieben ist ein Kommunikationsgerät (1), mit dem auf einfache und möglichst unauffällige Art und Weise eine Nachricht von einer ersten Person an mindestens ein zweites Kommunikationsgerät (10) gesendet werden kann.

Das Kommunikationsgerät (1) weist ein Gehäuse (2), einen Sender (3), einen Empfänger (4), eine Eingabeeinrichtung (5), eine Anzeigeeinrichtung (6), einen Speicher (7) und eine Steuereinrichtung (8) auf, wobei die Eingabeeinrichtung (5) mehrere Tastenfelder (9) aufweist, im Speicher (7) mehrere vorgegebene Nachrichten gespeichert sind oder mehrere individuell festlegbare Nachrichten speicherbar sind, wobei die einzelnen Tastenfelder (9) jeweils einer vorgegebenen oder individuell festgelegten Nachricht derart zugeordnet sind, dass bei Betätigung eines Tastenfeldes (9) die entsprechende Nachricht mit Hilfe der Steuereinrichtung (8) aus dem Speicher (7) ausgewählt und vom Sender (3) an mindestens einen Empfänger (4') mindestens eines zweiten Kommunikationsgeräts (10) gesendet wird, und wobei die Anzeigeeinrichtung (6) die Auswahl einer Nachricht durch Betätigung eines entsprechenden Tastenfeldes (9) der Eingabeeinrichtung (5) und/oder den Empfang der Nachricht durch den Empfänger (4') mindestens eines zweiten Kommunikationsgeräts (10) optisch anzeigt.

## Beschreibung

Die Erfindung betrifft ein Kommunikationsgerät, mit dem von einer ersten Person eine Nachricht mittels eines Senders an ein zweites Kommunikationsgerät, das einen Empfänger aufweist, gesendet werden kann. Eine zweite Person, die sich in der Nähe des zweiten Kommunikationsgeräts befindet, kann dadurch die Nachricht empfangen und einen der Nachricht entsprechenden Auftrag oder Vorgang ausführen.

Derartige Kommunikationsgeräte sind insbesondere aus der Gastronomie bekannt, wobei das Kommunikationsgerät dort dazu dient, dass ein Gast einer Servicekraft einen Bestellwunsch oder einen Bezahlwunsch mitteilen bzw. auf einen entsprechenden Wunsch hinweisen kann. Hierzu weist das am Tisch des Gastes aufgestellte Kommunikationsgerät neben einem Sender noch eine Eingabeeinrichtung auf, mit deren Hilfe der Gast seinen Wunsch - Bestellen oder Bezahlen - eingeben und absenden kann.

Ein derartiges Kommunikationsgerät ist aus der DE 20 2016 106 406 U1 bekannt. Das bekannte Kommunikationsgerät, das als Lampen- oder Kerzenersatz auf einem Restauranttisch angeordnet ist, weist zusätzlich eine Anzeigeeinrichtung auf, die ein optisches Dauersignal liefert, dessen Lichtintensität, Farbe oder Frequenz sich in Abhängigkeit von der Zeitdauer seit dem Absenden der Nachricht verändert. Das Servicepersonal soll dadurch einen Überblick bewahren können, welcher Gast wie lange darauf wartet, bedient zu werden. Bei diesem bekannten Kommunikationsgerät bzw. Personalrufsystem ist die Anzeigeeinrichtung funktionsbedingt dazu ausgebildet, dass sie von anderen Personen, insbesondere dem Servicepersonal, wahrgenommen wird. Daher ist dieses bekannte Kommunikationsgerät für andere Anwendungsfälle, bei denen die Benachrichtigung einer anderen Person unaufwendiger erfolgen soll, oder bei denen sich die zu benachrichtigende Person in einem anderen Raum befindet, nicht geeignet.

So gibt es beispielsweise bei Besprechungen im geschäftlichen Bereich das Erfordernis, einer anderen Person, beispielsweise einer Servicekraft oder einem Mitarbeiter, eine Nachricht zukommen zu lassen, damit diese dann einen bestimmten Auftrag ausführt, beispielsweise Unterlagen oder Getränke in den Besprechungsraum bringt. Darüber hinaus besteht bei einer derartigen Situation häufig der Wunsch, die Nachricht möglichst unauffällig zu versenden, sodass die Besprechung durch das Versenden der Nachricht nicht gestört wird.

Auch in anderen Bereichen von Betrieben oder Unternehmen, beispielsweise in einer Werkstatt oder einer Produktion, gibt es häufig die Notwendigkeit, einer anderen Person eine Nachricht zukommen zu lassen, damit diese dann einen bestimmten Auftrag ausführt oder eine bestimmte Aufgabe erledigen kann. In einer Werkstatt kann es sich beispielsweise um die Anforderung eines Ersatzteiles oder eines Werkzeugs aus einem Lager handeln, das an einem bestimmten Arbeitsplatz benötigt wird. Entsprechend kann es sich in einer Produktionshalle beispielsweise um die Anforderung eines Bauteils handeln, dass für den weiteren Produktionsablauf benötigt wird.

Der vorliegenden Erfindung liegt daher die Aufgabe zugrunde, ein entsprechendes Kommunikationsgerät zur Verfügung zu stellen, mit dem eine Nachricht von einer ersten Person an mindestens eine zweite Person gesendet werden kann. Das Versenden der Nachricht soll dabei möglichst einfach erfolgen, sodass die Person, die das Kommunikationsgerät bedient, allenfalls für einen kurzen Augenblick abgelenkt ist.

Diese Aufgabe ist bei einem Kommunikationsgerät mit den Merkmalen des Patentanspruchs 1 gelöst. Das erfindungsgemäße Kommunikationsgerät weist dabei neben einem Gehäuse und einem Sender sowie einer Eingabeeinrichtung und einer Anzeigeeinrichtung auch einen Empfänger sowie einen Speicher und eine Steuereinrichtung auf. Der Speicher ist dabei derart ausgebildet, dass in ihm mehrere vorgegebene Nachrichten gespeichert sind oder mehrere individuell festlegbare Nachrichten speicherbar sind. Mit Hilfe der Steuereinrichtung erfolgt dabei ein Zugriff auf die in dem Speicher abgespeicherten Nachrichten.

Die Eingabeeinrichtung weist mehrere Tastenfelder auf, die jeweils einer vorgegebenen oder individuell festgelegten Nachricht derart zugeordnet sind, dass bei Betätigung eines Tastenfeldes die entsprechende Nachricht mit Hilfe der Steuereinrichtung aus dem Speicher ausgewählt und vom Sender an mindestens einen Empfänger mindestens eines zweiten Kommunikationsgeräts gesendet wird. Zum Versenden einer bestimmten Nachricht muss somit nur das dieser Nachricht zugeordnete Tastenfeld gedrückt werden, was sehr unauffällig erfolgen kann, sodass andere Personen dadurch nicht gestört werden. Außerdem wird auch die Person, die das Kommunikationsgerät bedient, durch das Drücken des entsprechenden Tastenfeldes nicht oder allenfalls für einen sehr kurzen Moment abgelenkt. Auch diese Person wird dadurch bei ihrer Tätigkeit nicht länger gestört, sodass sie beispielsweise einer Besprechung ohne Probleme weiter folgen oder ihre Arbeit, beispielsweise eine Reparatur oder Montagetätigkeit, weiter fortsetzen kann.

Bei dem erfindungsgemäßen Kommunikationsgerät wird darüber hinaus durch die Anzeigeeinrichtung die Auswahl einer Nachricht durch Betätigung eines entsprechenden Tastenfeldes der Eingabeeinrichtung optisch angezeigt, sodass der Bediener des Kommunikationsgeräts dadurch auf einfache Art und Weise eine Rückmeldung erhält, dass er die gewünschte Nachricht gesendet hat. Alternativ oder zusätzlich kann durch die Anzeigeeinrichtung auch der Empfang der Nachricht durch den Empfänger eines zweiten Kommunikationsgeräts optisch angezeigt werden. Denkbar ist beispielsweise, dass durch die Anzeigeeinrichtung zunächst das Versenden einer entsprechenden Nachricht optisch dadurch angezeigt wird, dass ein entsprechendes Leuchtmittel leuchtet, wobei das Leuchtmittel dann wieder erlischt, wenn von einer weiteren Person der Empfang der Nachricht am zweiten Kommunikationsgerät bestätigt wird. Dadurch wird dem Benutzer des ersten Kommunikationsgeräts angezeigt, dass seine Nachricht vom zweiten Kommunikationsgerät empfangen und von einer Person, die sich in der Nähe des zweiten Kommunikationsgeräts befindet, zur Kenntnis genommen worden ist.

Vorteilhaft ist dabei auch, dass der Bediener des Kommunikationsgeräts nicht darauf angewiesen ist, dass die Person, der er die Nachricht senden will, zum Zeitpunkt des Versendens der Nachricht zum Empfang der Nachricht bereit ist. Unter Umständen ist es noch nicht einmal erforderlich, dass eine ganz bestimmte Person die gesendete Nachricht empfängt, wenn sich das zweite Kommunikationsgerät beispielsweise an einem Ort befindet, an dem sich mehrere Personen aufhalten können, die einen der Nachricht entsprechenden Auftrag oder Vorgang ausführen können.

Gemäß einer vorteilhaften Ausgestaltung weist die Anzeigeeinrichtung des Kommunikationsgeräts mehrere Leuchtmittel, insbesondere mehrere LEDs auf, wobei die Anzahl der Tastenfelder der Eingabeeinrichtung vorzugsweise der Anzahl der Leuchtmittel entspricht, sodass jeweils ein Tastenfeld einem Leuchtmittel zugeordnet ist. Das Leuchtmittel kann dabei beispielsweise innerhalb des Gehäuses unter einer zumindest teiltransparenten Abdeckung angeordnet sein, wobei die Abdeckung ein die entsprechende Nachricht kennzeichnendes Symbol aufweist. Hierdurch erhält der Benutzer des Kommunikationsgeräts durch Aufleuchten der entsprechenden Abdeckung mit dem Symbol eine zusätzliche optische Rückmeldung, welche Nachricht er durch Drücken des Tastenfeldes ausgesendet hat.

Alternativ oder zusätzlich kann die Anzeigeeinrichtung ein Display aufweisen, auf dem die Auswahl einer Nachricht durch Betätigung des entsprechenden Tastenfeldes der Eingabeeinrichtung und/oder eine vom Empfänger des Kommunikationsgeräts empfangene Nachricht eines zweiten Kommunikationsgeräts anzeigbar ist. Dadurch kann die Person, an die die Nachricht gesendet worden ist, dem Benutzer des Kommunikationsgeräts beispielsweise mitteilen, dass sie den Auftrag erledigt oder dass sich die Erledigung des Auftrags verzögert oder derzeit nicht möglich ist.

Gemäß einer weiteren vorteilhaften Ausgestaltung der Erfindung weist die Eingabeeinrichtung des Kommunikationsgeräts einen Touchscreen auf. Ein solcher Touchscreen kann dabei entweder zusätzlich zu anderen Tastenfeldern vorgesehen sein oder zumindest einzelne Tastenfelder der Eingabeeinrichtung funktional ersetzen. Denkbar ist auch, dass die Eingabeeinrichtung nur mindestens einen Touchscreen aufweist, auf dem beispielsweise mehrere Symbole angeordnet sind, die die Funktion der einzelnen Tastenfelder übernehmen. Durch Berühren der Tastenfelder des Touchscreens bzw. der einzelnen auf dem Touchscreen abgebildeten Symbole kann somit das Versenden einer entsprechenden Nachricht gestartet werden. Bei den Tastenfeldern des erfindungsgemäßen Kommunikationsgeräts kann es sich somit sowohl um einzelne Tasten handeln, als auch um Bereiche bzw. Felder mindestens eines Touchscreens.

Weist das Kommunikationsgerät mindestens einen Touchscreen auf, so kann dieser nicht nur der Eingabeeinrichtung, sondern funktional auch der Anzeigeeinrichtung zugeordnet sein. Der Touchscreen kann dann auch dazu ausgebildet sein, die Auswahl einer entsprechenden Nachricht durch Betätigung eines entsprechenden Tastenfeldes bzw. eines entsprechenden Symbols auf dem Touchscreen oder den Empfang einer Nachricht von einem zweiten Kommunikationsgerät anzuzeigen.

In einer weiteren Ausgestaltung des erfindungsgemäßen Kommunikationsgeräts weist dieses ein Mikrofon auf, mit dem eine Sprachnachricht aufgenommen und vom Sender des Kommunikationsgeräts an mindestens einen Empfänger mindestens eines zweiten Kommunikationsgeräts gesendet werden kann. Die Aktivierung des Mikrofons kann dabei mittels eines entsprechenden Tastenfeldes bzw. eines Symbols auf einem Touchscreen erfolgen. Dadurch kann situationsbedingt auch eine Sprachnachricht über das Kommunikationsgerät gesendet werden, wenn beispielsweise eine gewünschte Nachricht nicht im Speicher abgespeichert ist. Da die Sprachnachricht in digitaler Form vom Sender des Kommunikationsgeräts an den entsprechenden Empfänger des zweiten Kommunikationsgeräts gesendet wird, kann die Sprachnachricht im zweiten Kommunikationsgerät gespeichert werden, so dass sie von einer anderen Person bei nächster Gelegenheit als Sprachnachricht abgehört werden kann. Der Benutzer des Kommunikationsgeräts muss somit nicht, wie bei einem Telefonanruf, darauf warten, dass die andere Person verfügbar ist und einen Anruf annimmt. Dadurch kann auch das Versenden einer Sprachnachricht relativ unauffällig und schnell erfolgen.

Um das Versenden einer Sprachnachricht auch vom zweiten Kommunikationsgerät zum ersten Kommunikationsgerät zu ermöglichen, weist das Kommunikationsgerät vorzugsweise auch einen Lautsprecher auf, mit dem eine vom Empfänger des Kommunikationsgeräts empfangene Nachricht eines zweiten Kommunikationsgeräts als Sprachnachricht wiedergegeben werden kann.

Eingangs ist ausgeführt worden, dass das erfindungsgemäße Kommunikationsgerät einen Sender und einen Empfänger zum Senden bzw. Empfangen entsprechender Nachrichten aufweist. Das Senden und Empfangen der Nachrichten erfolgt dabei vorzugsweise drahtlos, insbesondere per Funktechnik, beispielsweise über Bluetooth, WLAN oder DECT (Digital Enhanced Cordless Telecommunications), einem Funkstandard, der häufig bei Festnetztelefonen eingesetzt wird. Dabei kann das erste Kommunikationsgerät die Funktion eines Masters und das mindestens eine zweite Kommunikationsgerät die Funktion eines Slaves aufweisen. Das Master-Kommunikationsgerät, von dem in der Regel die Nachrichten versendet werden, kann dabei auch mit mehreren Slave-Kommunikationsgeräten, die in der Regel die Nachrichten empfangen verbunden sein. In beiden Fällen kann die Verbindung zwischen den einzelnen Kommunikationsgeräten schnell und einfach eingerichtet werden, ohne in bestehende Netzwerke eingreifen zu müssen. Die Auswahl der Art der Nachrichtenübertragung - beispielsweise Bluetooth, WLAN oder DECT - richtet sich dabei in der Regel danach, welche Entfernungen bei der jeweiligen Anwendung zwischen dem Master-Kommunikationsgerät und den einzelnen Slave-Kommunikationsgeräten bestehen.

Um individuell festlegbare Nachrichten auf einfache Art und Weise im Speicher des Kommunikationsgeräts abspeichern zu können, weist das Kommunikationsgerät vorzugsweise eine entsprechende Schnittstelle auf, über die die Nachrichten mittels einer entsprechenden Software oder einer App im Speicher gespeichert werden können. Über eine derartige Schnittstelle kann auch die Zuordnung einzelner Tastenfelder der Eingabeeinrichtung zu den einzelnen Nachrichten programmiert werden, sodass das Kommunikationsgerät an die jeweiligen Anforderungen angepasst werden kann. Die Einrichtung der Kommunikationsgeräte kann dadurch benutzerfreundlich, beispielsweise über ein entsprechendes Smartphone und eine darauf installierte App, durchgeführt werden.

Eingangs ist ausgeführt worden, dass die Übermittlung einer entsprechenden Nachricht mit dem Kommunikationsgerät möglichst einfach erfolgen soll. Hierzu kann das Kommunikationsgerät als Tischgerät ausgebildet, das relativ geringe Abmessungen aufweist. Das Tischgerät kann dabei relativ unauffällig auf einem Besprechungstisch platziert werden. Vorzugsweise weist das Tischgerät dabei eine Grundfläche von maximal 250 cm², insbesondere von maximal 100 cm², oder bei einer kreisförmigen Ausführung einen Durchmesser von maximal 15 cm, insbesondere von maximal 10 cm auf. Die Oberseite des Kommunikationsgeräts kann derart ausgebildet sein, dass sie ein Firmenlogo aufweist oder ein Firmenlogo anzeigen bzw. aufnehmen kann.

Das Kommunikationsgerät kann von seinen Abmessungen auch so ausgebildet sein, dass es einfach von einer Person mitgeführt werden kann, beispielsweise in einer Jackentasche oder einer Hosentasche aufgenommen werden kann. Daneben ist es jedoch auch möglich, dass das Kommunikationsgerät größere Abmessungen aufweist und beispielsweise zur festen Anordnung an einem bestimmten Standort, beispielsweise einer Wand, ausgebildet ist. Eine solche Ausgestaltung des Kommunikationsgeräts hat dann den Vorteil, dass das Kommunikationsgerät wahlweise von verschieden Personen bedient oder eine von dem Kommunikationsgerät empfangene Nachricht von mehreren Personen wahrgenommen werden kann. Letzteres kann beispielsweise vorteilhaft sein, wenn das Kommunikationsgerät in einem Lager angeordnet ist, in dem mehrere Personen tätig sind.

Um bei der Anordnung und Platzierung des Kommunikationsgeräts möglichst frei zu sein, weist das Kommunikationsgerät zur Stromversorgung vorzugsweise mindestens eine Batterie oder insbesondere mindestens einen Akku auf Über einen entsprechenden Anschluss und ein Ladekabel kann ein im Gehäuse des Kommunikationsgeräts angeordneter Akku schnell und einfach wieder aufgeladen werden. Alternativ kann eine Ladestation zum Laden der Akkus des Kommunikationsgeräts vorgesehen sein.

Neben einem zuvor im Einzelnen beschriebenen Kommunikationsgerät, das sowohl die Funktion eines Masters als auch die Funktion eines Slaves aufweisen kann, betrifft die vorliegende Erfindung darüber hinaus noch ein Kommunikationssystem, bestehend aus mindestens zwei Kommunikationsgeräten. Das erste Kommunikationsgerät kann die Funktion eines Masters und das zweite Kommunikationsgerät die Funktion eines Slaves aufweisen. Das Master-Kommunikationsgerät ist dabei dazu ausgebildet, dass bei Betätigung eines Tastenfeldes der Eingabeeinrichtung eine entsprechende Nachricht mit Hilfe der Steuereinrichtung aus dem Speicher ausgewählt und vom Sender des Master-Kommunikationsgeräts an den Empfänger des mindestens einen Slave-Kommunikationsgeräts gesendet wird. Das Slave-Kommunikationsgerät ist seinerseits dazu ausgebildet, die vom Master-Kommunikationsgerät gesendete Nachricht zu empfangen und mit Hilfe der Anzeigeeinrichtung des Slave-Kommunikationsgeräts anzuzeigen, sodass eine Servicekraft oder ein Mitarbeiter darauf hingewiesen wird, dass eine Nachricht eingegangen ist. Außer über eine optische Anzeige kann dies auch über ein akustisches Signal erfolgen, wenn das Slave-Kommunikationsgerät einen entsprechenden Lautsprecher aufweist.

Gemäß einer vorteilhaften Ausgestaltung des Kommunikationssystems ist das Slave-Kommunikationsgerät darüber hinaus dazu ausgebildet, nach Erhalt einer Nachricht vom Master-Kommunikationsgerät eine Antwort-Nachricht an das Master-Kommunikationsgerät zu senden. Bei der Antwort-Nachricht kann es sich im einfachsten Fall um eine Bestätigung handeln, dass die entsprechende Nachricht empfangen worden ist und von einer entsprechenden Person, beispielsweise einer Servicekraft, einem Lagerarbeiter oder einem anderen Mitarbeiter, ausgeführt wird.

Bezüglich weiterer vorteilhafter Ausgestaltung des Kommunikationssystems wird auf die vorherigen Ausführungen zum erfindungsgemäßen Kommunikationsgerät verwiesen. Grundsätzlich können dabei das Master-Kommunikationsgerät und das mindestens eine Slave-Kommunikationsgerät identische ausgebildet sein. Daneben ist es jedoch auch möglich, dass einzelne Funktionalitäten nur beim Master-Kommunikationsgerät oder bei einzelnen oder allen Slave-Kommunikationsgeräten ausgebildet sind. So kann beispielsweise das Master-Kommunikationsgerät ein Mikrofon und das Slave-Kommunikationsgerät einen Lautsprecher aufweisen. Das Slave-Kommunikationsgerät ist dann dazu ausgebildet, nach Erhalt einer Sprachnachricht vom Master-Kommunikationsgerät diese Sprachnachricht wiederzugeben. Die Wiedergabe der empfangenen Sprachnachricht kann dabei entweder unmittelbar nach Erhalt der Sprachnachricht oder auch zu einem späteren Zeitpunkt erfolgen, beispielsweise wenn von einer Person ein entsprechendes Tastenfeld zur Wiedergabe der Nachricht gedrückt worden ist.

Im Einzelnen gibt es verschiedene Möglichkeiten, das erfindungsgemäße Kommunikationsgerät bzw. das Kommunikationssystem auszugestalten und weiterzubilden. Dazu wird verwiesen sowohl auf die den Patentansprüchen 1 und 11 nachgeordneten Patentansprüche, als auch auf die nachfolgende Beschreibung bevorzugter Ausführungsbeispiele in Verbindung mit der Zeichnung. In der Zeichnung zeigen
- Fig. 1: eine schematische Darstellung eines Ausführungsbeispiel des erfindungsgemäßen Kommunikationsgeräts,
- Fig. 2: ein erstes Ausführungsbeispiel eines erfindungsgemäßen Kommunikationsgeräts, in perspektivischer Darstellung, und
- Fig. 3: eine schematische Darstellung eines Ausführungsbeispiels eines erfindungsgemäßen Kommunikationssystems.

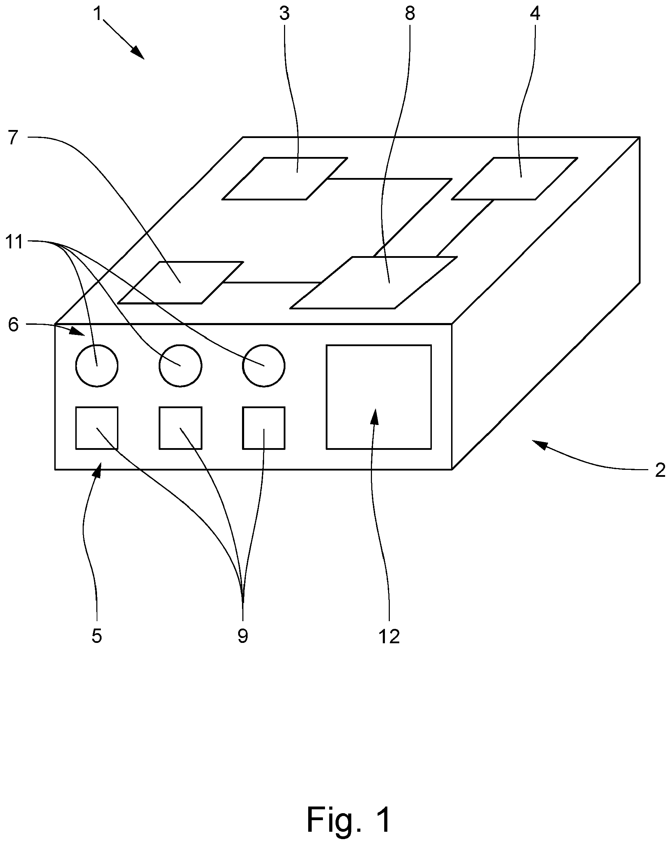

Fig. 1 zeigt eine schematische Darstellung eines Ausführungsbeispiels des erfindungsgemäßen Kommunikationsgeräts 1. Das Kommunikationsgerät 1 weist ein Gehäuse 2 auf, in dem ein Sender 3 und ein Empfänger 4 angeordnet sind. Außerdem weist das Kommunikationsgerät 1 eine von einem Benutzer bedienbare Eingabeeinrichtung 5 und eine Anzeigeeinrichtung 6 auf. Im Inneren des Gehäuses 2 sind darüber hinaus ein Speicher 7 und eine Steuereinrichtung 8 angeordnet, wobei die Steuereinrichtung 8 insbesondere von einem Mikroprozessor gebildet sein kann. Die Steuereinrichtung 8 dient dabei unter anderem zum Zugriff auf Nachrichten, die im Speicher 7 in digitaler Form abgespeichert sind.

Die Eingabeeinrichtung 5 weist mehrere, vorliegend vier Tastenfelder 9 auf, wobei jeweils ein Tastenfeld 9 einer im Speicher 7 abgespeicherten Nachricht derart zugeordnet ist, dass bei Betätigung eines Tastenfeldes 9 die entsprechende Nachricht mit Hilfe der Steuereinrichtung 8 aus dem Speicher 7 ausgewählt und vom Sender 3 an ein zweites Kommunikationsgerät 10 gesendet wird. Hierzu weist das zweite Kommunikationsgerät 10 einen zum Sender 3 korrespondierenden Empfänger 4' auf.

Bei dem schematisch dargestellten Ausführungsbeispiel weist die Anzeigeeinrichtung 6 mehrere, vorliegend vier, Leuchtmittel 11 auf, die als LEDs ausgebildet sein können. Die einzelnen Leuchtmittel 11 sind dabei räumlich benachbart zu den einzelnen Tastenfeldern 9 der Eingabeeinrichtung 5 angeordnet und darüber hinaus den einzelnen Tastenfeldern 9 derart funktional zugeordnet, dass bei Auswahl einer Nachricht durch Betätigung des entsprechenden Tastenfeldes 9 das diesem Tastenfeld 9 zugeordnete Leuchtmittel 11 leuchtet.

Zusätzlich zu den Leuchtmitteln 11 kann die Anzeigeeinrichtung 6 auch ein Display 12 aufweisen, auf dem eine vom Empfänger 4 des Kommunikationsgeräts 1 empfangene Nachricht eines zweiten Kommunikationsgeräts 10 angezeigt werden kann. Bei der empfangenen Nachricht kann es sich beispielsweise um die Bestätigung handeln, dass die vom Benutzer des Kommunikationsgeräts 1 gesendete Nachricht empfangen worden ist und nun von einer anderen Person ausgeführt wird. Hat der Benutzer des Kommunikationsgeräts 1 beispielsweise durch Betätigen eines entsprechenden Tastenfeldes 9 eine Nachricht gesendet, das weitere Getränke in einen Besprechungsraum gebracht oder Ersatzteile aus einem Lager in eine Werkstatt werden sollen, so kann er von einer Servicekraft oder einem Lagermitarbeiter, in deren Nähe das zweite Kommunikationsgerät 10 angeordnet ist, die Antwort-Nachricht erhalten, dass die gewünschten Getränke bzw. das Ersatzteil geliefert werden. Diese Nachricht kann beispielsweise durch das Wort "Ok" oder ein entsprechendes Symbol auf dem Display 12 angezeigt werden. Alternativ dazu kann der Empfang der entsprechenden Nachricht auch dadurch signalisiert werden, dass die LED 11 die nach dem Drücken des entsprechenden Tastenfeldes 9 zunächst leuchtet, und dann beim Empfang einer entsprechenden Antwort-Nachricht erlischt.

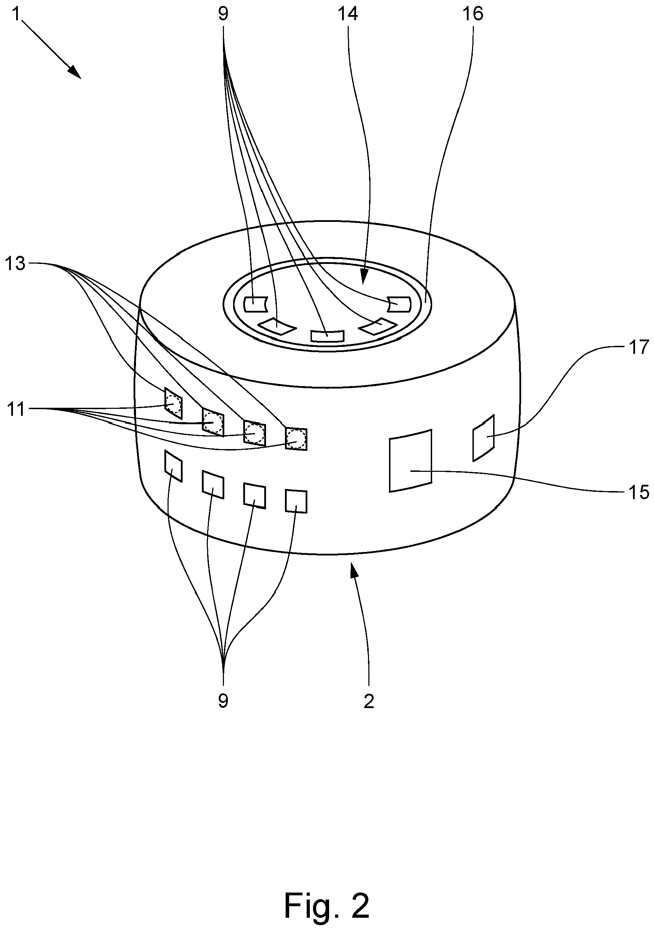

Fig. 2 zeigt ein Ausführungsbeispiel eines erfindungsgemäßen Kommunikationsgeräts 1 in einer perspektivischen Darstellung. Bei dem dargestellten Ausführungsbeispiel weist das Kommunikationsgerät 1 ein zylindrisches Gehäuse 2 auf, wobei der Durchmesser beispielsweise ca. 10 bis 12 cm und die Höhe des Gehäuses 2 ca. 5 bis 7 cm beträgt. Das Kommunikationsgerät 1 weist somit relativ geringe Abmessungen auf, sodass es einfach und unauffällig als Tischgerät verwendet werden kann.

Im Inneren des Gehäuses 2 des Kommunikationsgeräts 1 sind wiederum ein Sender und ein Empfänger sowie ein Speicher und eine Steuereinrichtung angeordnet, die jedoch nicht durch das Gehäuse 2 hindurch sichtbar sind. Außerdem weist das Kommunikationsgerät 1 mehrere, an einer Seite der Mantelfläche des Gehäuses 2 angeordnete Tastenfelder 9 auf, denen eine entsprechende Anzahl an Leuchtmitteln 11 zugeordnet ist. Die Leuchtmittel 11 sind dabei jeweils unter einer teiltransparenten Abdeckung 13 angeordnet, auf der jeweils ein Symbol aufgebracht ist. Durch das Symbol wird jeweils die Nachricht dargestellt, die dem unterhalb der Abdeckung 13 angeordneten Tastenfeld 9 zugeordnet ist. Beim Drücken eines entsprechenden Tastenfeldes 9 wird dem Benutzer somit durch das Aufleuchten der Abdeckung 13 mit dem entsprechenden Symbol die von ihm soeben versendete Nachricht visualisiert.

Zusätzlich weist das Kommunikationsgerät 1 auf der Oberseite des Gehäuses 2 ein Touchscreen 14 auf, auf dem verschiedene Symbole angeordnet sein können, die die Funktion von entsprechenden Tastenfelder 9 haben, sodass durch Berühren des Touchscreens 14 bzw. der einzelnen Symbole das Versenden einer entsprechenden Nachricht gestartet werden kann. Durch optisches Hervorheben eines einzelnen Symbols bzw. Tastenfeldes 9 auf dem Touchscreen 14 kann der Touchscreen 14 auch Funktionen der Anzeigeeinrichtung wahrnehmen, indem beispielsweise die Bestätigung des Empfangs der Nachricht am zweiten Kommunikationsgerät durch Aufleuchten des entsprechenden Tastenfeldes 9 auf dem Touchscreen 14 angezeigt wird.

Das in Fig. 2 dargestellte Ausführungsbeispiel des Kommunikationsgeräts 1 weist darüber hinaus noch ein Mikrofon 15 und einen Lautsprecher 16 auf. Das Mikrofon 15 ist dabei seitlich neben den Tastenfeldern 9 angeordnet, sodass es bei der Ausrichtung des Gehäuses 2 mit den Tastenfeldern 9 zum Benutzer ebenfalls in Richtung des Benutzers ausgerichtet ist. Der Lautsprecher 16 ist dagegen an der Oberseite des Gehäuses 2 angeordnet, wobei der Lautsprecher 16 den Touchscreen 14 ringförmig umgibt. Alternativ dazu können sowohl das Mikrofon 15 als auch der Lautsprecher 16 jedoch auch an anderen Stellen des Gehäuses 2 angeordnet sein. Beispielsweise kann auch der Lautsprecher 16 in der Nähe der Tastenfelder 9, beispielsweise neben dem Mikrofon 15, angeordnet sein, sodass auch der Lautsprecher 16 in Richtung des Benutzers gerichtet ist.

Außerdem weist das Kommunikationsgerät 1 noch eine Schnittstelle 17 auf, über die die Nachrichten mittels einer entsprechenden Software oder einer App im Speicher 7 des Kommunikationsgeräts 1 gespeichert werden können. Über die Schnittstelle 17 kann auch die Zuordnung der einzelnen Tastenfelder 9 der Eingabeeinrichtung 5 zu den einzelnen Nachrichten programmiert werden, sodass das Kommunikationsgerät 1 einfach an unterschiedliche Anforderungen angepasst werden kann.

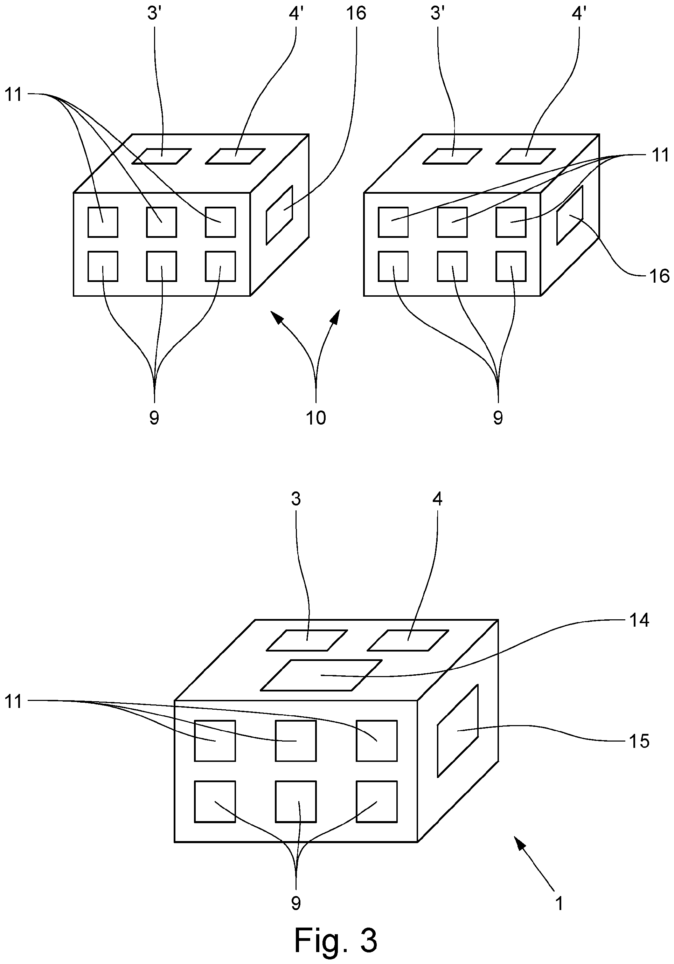

Fig. 3 zeigt eine schematische Darstellung eines Ausführungsbeispiels des erfindungsgemäßen Kommunikationssystems, das vorliegend aus einem ersten Kommunikationsgerät 1, das die Funktion eines Masters aufweist, und zwei zweiten Kommunikationsgeräten 10, die jeweils die Funktion eines Slaves aufweisen, gebildet wird. Die einzelnen Kommunikationsgeräte 1, 10 können sowohl identisch als auch unterschiedlich ausgebildet sein. So ist es beispielsweise möglich, dass nur das Master-Kommunikationsgerät 1 ein Touchscreen 14 aufweist, während bei den Slave-Kommunikationsgeräten 10 die Anzeigeeinrichtung nur von einzelnen Leuchtmitteln 11 gebildet wird.

Die Übertragung der Nachrichten vom Master-Kommunikationsgerät 1 zu den Slave-Kommunikationsgeräten 10 sowie die Übertragung von möglichen Antwort-Nachrichten von den Slave-Kommunikationsgeräten 10 zum Master-Kommunikationsgerät 1 erfolgt per Funktechnik, insbesondere über Bluetooth oder WLAN. Hierzu weisen die Kommunikationsgeräte 1, 10 entsprechende Schnittstellen auf.

Je nach Anwendungsfall kann die Anzahl der ein Kommunikationssystem bildenden Kommunikationsgeräten 1, 10 variieren. Dabei können nicht nur mehrere Slave-Kommunikationsgeräte 10 sondern auch mehrere Master-Kommunikationsgeräte 1 zusammen ein Kommunikationssystem bilden. Über eine entsprechende Programmierung kann außerdem die Funktion der einzelnen Kommunikationsgeräte 1, 10 als Master-Kommunikationsgerät oder als Slave-Kommunikationsgerät verändert bzw. festgelegt werden. Auf diese Weise ist das Kommunikationssystem einfach an unterschiedliche Anwendungsfälle anpassbar.

### Bezugszeichen

- 1.: Kommunikationsgerät
- 2.: Gehäuse
- 3, 3'.: Sender
- 4, 4': Empfänger
- 5.: Eingabeeinrichtung
- 6.: Anzeigeeinrichtung
- 7.: Speicher
- 8.: Steuereinrichtung
- 9.: Tastenfeld
- 10.: zweite Kommunikationsgerät
- 11.: Leuchtmittel
- 12.: Display
- 13.: Abdeckung
- 14.: Touchscreen
- 15.: Mikrofon
- 16.: Lautsprecher
- 17.: Schnittstelle

## Patentansprüche

1. Kommunikationsgerät (1) mit einem Gehäuse (2), mit einem Sender (3), mit einem Empfänger (4), mit einer Eingabeeinrichtung (5), mit einer Anzeigeeinrichtung (6), mit einem Speicher (7) und mit einer Steuereinrichtung (8),
wobei die Eingabeeinrichtung (5) mehrere Tastenfelder (9) aufweist,
wobei im Speicher (7) mehrere vorgegebene Nachrichten gespeichert sind oder mehrere individuell festlegbare Nachrichten speicherbar sind,
wobei die einzelnen Tastenfelder (9) jeweils einer vorgegebenen oder individuell festgelegten Nachricht derart zugeordnet sind, dass bei Betätigung eines Tastenfeldes (9) die entsprechende Nachricht mit Hilfe der Steuereinrichtung (8) aus dem Speicher (7) ausgewählt und vom Sender (3) an mindestens einen Empfänger (4') mindestens eines zweiten Kommunikationsgeräts (10) gesendet wird, und
wobei die Anzeigeeinrichtung (6) die Auswahl einer Nachricht durch Betätigung eines entsprechenden Tastenfeldes (9) der Eingabeeinrichtung (5) und/oder den Empfang einer Nachricht durch den Empfänger (4') mindestens eines zweiten Kommunikationsgeräts (10) optisch anzeigt.

2. Kommunikationsgerät (1) nach Anspruch 1, **dadurch gekennzeichnet, dass** die Anzeigeeinrichtung (6) mehrere Leuchtmittel (11) aufweist, wobei die Anzahl der Tastenfelder (9) vorzugsweise der Anzahl der Leuchtmittel (11) entspricht.

3. Kommunikationsgerät (1) nach Anspruch 1 oder 2, **dadurch gekennzeichnet, dass** die Anzeigeeinrichtung (6) ein Display (12) aufweist, auf dem die Auswahl einer Nachricht durch Betätigung des entsprechenden Tastenfeldes (9) der Eingabeeinrichtung (5) und/oder eine vom Empfänger (4) empfangene Nachricht eines zweiten Kommunikationsgeräts (10) anzeigbar ist.

4. Kommunikationsgerät (1) nach einem der Ansprüche 1 bis 3, **dadurch gekennzeichnet, dass** die Eingabeeinrichtung (5) einen Touchscreen (14) aufweist und dass auf dem Touchscreen (14) mindestens ein Tastenfeld (9) ausgebildet ist.

5. Kommunikationsgerät (1) nach Anspruch 4, **dadurch gekennzeichnet, dass** der Touchscreen (14) funktional sowohl der Eingabeeinrichtung (5) als auch der Anzeigeeinrichtung (6) zugeordnet ist.

6. Kommunikationsgerät (1) nach einem der Ansprüche 1 bis 5, **dadurch gekennzeichnet, dass** ein Mikrofon (15) vorgesehen ist, mit dem eine Sprachnachricht aufgenommen und vom Sender (3) an mindestens einen Empfänger (4') mindestens eines zweiten Kommunikationsgeräts (10) gesendet werden kann.

7. Kommunikationsgerät (1) nach einem der Ansprüche 1 bis 6, **dadurch gekennzeichnet, dass** ein Lautsprecher (16) vorgesehen ist, mit dem eine vom Empfänger (3) empfangene Nachricht eines zweiten Kommunikationsgeräts (10) als Sprachnachricht wiedergegeben werden kann.

8. Kommunikationsgerät (1) nach einem der Ansprüche 1 bis 7, **dadurch gekennzeichnet, dass** der Sender (3) dazu ausgebildet ist, Nachrichten per Funktechnik, insbesondere über Bluetooth, WLAN oder DECT, an mindestens einen Empfänger (4') mindestens eines zweiten Kommunikationsgeräts (10) zu senden und der Empfänger (4) dazu ausgebildet ist, Nachrichten per Funktechnik von mindestens einen Sender (3') mindestens eines zweiten Kommunikationsgeräts (10) zu empfangen.

9. Kommunikationsgerät (1) nach einem der Ansprüche 1 bis 8, **dadurch gekennzeichnet, dass** eine Schnittstelle (17) vorgesehen ist, über die individuell festlegbare Nachrichten mittels einer Software oder einer App im Speicher (7) gespeichert und/oder die Zuordnung der einzelnen Tastenfelder (9) der Eingabeeinrichtung (5) zu den einzelnen Nachrichten programmierbar ist.

10. Kommunikationsgerät (1) nach einem der Ansprüche 1 bis 9, **dadurch gekennzeichnet, dass** das Kommunikationsgerät (1) als Tischgerät ausgebildet ist und eine Grundfläche von maximal 250 cm² oder einen Durchmesser von maximal 15 cm aufweist.

11. Kommunikationssystem bestehend aus mindestens zwei Kommunikationsgeräten (1, 10) nach einem der Ansprüche 1 bis 10, wobei das erste Kommunikationsgerät (1) die Funktion eines Masters (Master-Kommunikationsgerät) und das zweite Kommunikationsgerät (10) die Funktion eines Slaves (Slave-Kommunikationsgeräts) aufweist, wobei das Master-Kommunikationsgerät (1) dazu ausgebildet ist, dass bei Betätigung eines Tastenfeldes (9) eine entsprechende Nachricht mit Hilfe der Steuereinrichtung (8) aus dem Speicher (7) ausgewählt und vom Sender (3) an den Empfänger (4') des Slave-Kommunikationsgeräts (10) gesendet wird, und wobei das Slave-Kommunikationsgerät (10) dazu ausgebildet ist, die vom Master-Kommunikationsgerät (1) gesendet Nachricht zu empfangen und mit Hilfe der Anzeigeeinrichtung (6') des Slave-Kommunikationsgeräts (10) anzuzeigen.

12. Kommunikationssystem nach Anspruch 11, **dadurch gekennzeichnet, dass** das Slave-Kommunikationsgerät (10) dazu ausgebildet ist, nach Erhalt einer Nachricht vom Master-Kommunikationsgerät (1) eine Antwort-Nachricht an das Master-Kommunikationsgerät (1) zu senden.

13. Kommunikationssystem nach Anspruch 11 oder 12, wobei das Master-Kommunikationsgerät (1) ein Mikrofon (15) und das Slave-Kommunikationsgerät (10) einen Lautsprecher aufweist, **dadurch gekennzeichnet, dass** das Slave-Kommunikationsgerät (10) dazu ausgebildet ist, nach Erhalt einer Sprachnachricht vom Master-Kommunikationsgerät (1) die Sprachnachricht wiederzugeben, wobei die Wiedergabe der empfangenen Sprachnachricht auch zu einem späteren Zeitpunkt erfolgen kann.
